# EUROPEAN PATENT SPECIFICATION

(11) **EP 3 660 641 B1**
(45) Date of publication and mention of the grant of the patent: **04.05.2022**
(21) Application number: 19211065.8
(22) Date of filing: 22.11.2019
(51) Int. Cl.: G06F 3/042, G06F 3/0488, G06F 3/0484

(54) **DISPLAY APPARATUS AND METHOD OF CONTROLLING THE SAME**
ANZEIGEVORRICHTUNG UND VERFAHREN ZUR STEUERUNG DAVON
APPAREIL D'AFFICHAGE ET SON PROCÉDÉ DE COMMANDE

(30) Priority: 27.11.2018 KR 20180148673
(43) Date of publication of application: 03.06.2020
(73) Proprietor: Samsung Electronics Co., Ltd., Gyeonggi-do 16677 (KR)
(72) Inventor: KIM, Hyeonggwon, Gyeonggi-do 16677 (KR); NAM, Daehyun, Gyeonggi-do 16677 (KR); KIM, Wonpil, Gyeonggi-do 16677 (KR)
(74) Representative: Appleyard Lees IP LLP

(56) References cited:
- EP-A2- 0 901 065
- US-A1- 2006 001 654

## Description

### BACKGROUND

### Field

The disclosure provides apparatuses and methods consistent with the exemplary embodiments that relate to a display apparatus and a method of controlling the same, and more particularly to a display apparatus capable of obtaining a touch input, a method of controlling the same, and a recording medium thereof.

### Description of the Related Art

A display apparatus may refer to an apparatus that processes data obtained from the outside or stored therein and may display an image on a screen, and has gradually become widespread in use (e.g., use in school, business, etc. as well as home).

With the development of the display apparatus technology, various functions have been added to the display apparatus. For example, the display apparatus may function as an interactive whiteboard so that a pointer (e.g., a pointing device or a finger(s)) can be used to make a touch input on a screen.

As a method of recognizing such a touch on the screen, a touch module (e.g., a resistive type, a capacitive type, a surface acoustic wave (SAW) type, an infrared (IR) type, etc.) have been put to practical use. As an example, an IR type touch module has been widely used for the interactive whiteboard or the like display apparatus having a large screen. The touch module may contain a sensor. US20060001654A1 discloses a light-based touch screen display comprising a processor configured to generate a display on a touch screen that traces movements of a stylus on the touch screen.

### SUMMARY

The invention relates to a display apparatus according to claim 1 and a method of controlling a display apparatus according to claim 9.

According to an embodiment, the disclosure provides a display apparatus including: a display; an optical sensor including a plurality of light transmitters and a plurality of light receivers arranged around the display, facing each other and configured to transmit and obtain light; and a processor configured to: identify a touch position of a pointer on a screen of the display, based on light transmitted and obtained by the optical sensor, cause the display to display an image on the screen along touch positions of successive touches, based on movement of the pointer, identify a touch size of the pointer, based on light transmitted and obtained by the optical sensor while the pointer is moved, and adjust a width of at least a portion of the image displayed on the screen, based on a variation in the touch size of the pointer.

The optical sensor may be further configured to identify the variation in the touch size of the pointer in the successive touches of the pointer, and the processor may be further configured to adjust a width of a writing or drawing image displayed on the screen of the display based on the variation in the identified touch size in the successive touches.

The processor may be further configured to identify the touch size based on at least one between a width and a height of a region touched by the pointer on the screen of the display.

The optical sensor may be further configured to form a matrix in front of the screen of the display with light transmitted and obtained between the plurality of light transmitters and the plurality of light receivers.

The pointer may include a user's body part including one or more of: a thumb, one or more fingers or a palm, or a passive type device including a pen or a brush.

The processor is further configured to: identify the number of pixels corresponding to the identified touch size, based on a size and a resolution of the display, and adjust the width of the at least the portion of the image displayed on the screen of the display based on the identified number of pixels.

The processor may be further configured to convert the identified touch size into a pressure value, and adjust the width of the at least the portion of the image based on the converted pressure value.

The processor may be further configured to adjust the width of the at least the portion of the image corresponding to the variation in the touch size, based on the identified touch size being within a preset range.

The processor may be further configured to control the image displayed on the screen to be deleted corresponding to the touch positions of the successive touches of the pointer, based on the identified touch size being greater than a preset threshold value.

The processor may be further configured to: obtain a user input for selecting one of a real-time variable touch-size mode and a fixed touch-size mode, cause the display to display the image with a width of the at least the portion of the image adjusted corresponding to the variation in the touch size, based on the selection of the real-time variable touch-size mode, and cause the display to display the image with a fixed width regardless of the variation in the touch size, based on the selection of the fixed touch-size mode.

According to an embodiment, the disclosure provides a method of controlling a display apparatus, the method including: identifying a touch position of a pointer on a screen of a display, based on light transmitted and obtained by an optical sensor including a plurality of light transmitters and a plurality of light receivers arranged around the display, facing each other and configured to transmit and obtain light; displaying an image on the screen along touch positions of successive touches, based on movement of the pointer; identifying a touch size of the pointer, based on light transmitted and obtained by the optical sensor while the pointer is moved; and adjusting a width of at least a portion of the image displayed on the screen, based on a variation in the touch size of the pointer.

The identifying of the touch size may include identifying the variation in the touch size of the pointer in the successive touches of the pointer, and the adjusting of the width of the image may include adjusting a width of a writing or drawing image displayed on the screen of the display based on the variation in the identified touch size in the successive touches. The identifying of the touch size may include identifying the touch size based on at least one between a width and a height of a region touched by the pointer on the screen of the display.

The optical sensor may be further configured to form a matrix in front of the screen of the display with light transmitted and obtained between the plurality of light transmitters and the plurality of light receivers.

The pointer may include at least one of: a user's body part including one or more of: a thumb, one or more fingers, or a palm, or a passive type device including a pen or a brush.

The identifying of the touch size includes: identifying the number of pixels corresponding to the identified touch size, based on a size and a resolution of the display, and adjusting the width of the at least the portion of the image displayed on the screen of the display based on the identified number of pixels.

The method may further include: converting the identified touch size into a pressure value; and adjusting the width of the at least the portion of the image based on the converted pressure value.

The adjusting of the width of the at least the portion of the image may include adjusting the width of the at least the portion of the image corresponding to the variation in the touch size, based on the identified touch size being within a preset range.

The method may further include obtaining a user input for selecting one of a real-time variable touch-size mode and a fixed touch-size mode, and the adjusting of the width of the at least the portion of the image may include: displaying the image with a width of the at least the portion of the image adjusted corresponding to the variation in the touch size, based on the selection of the real-time variable touch-size mode, and displaying the at least the portion of the image with a fixed width regardless of the variation in the touch size, based on the selection of the fixed touch-size mode.

According to an embodiment, not falling under the scope of the appended claims, the disclosure provides a non-transitory computer readable medium comprising: computer executable instruction code that, when executed by the processor, may cause the processor to: identify a touch position of a pointer on a screen of a display, based on light transmitted and obtained by an optical sensor comprising a plurality of light transmitters and a plurality of light receivers arranged around the display, facing each other and configured to transmit and obtain light; cause the display to display an image on the screen along touch positions of successive touches, based on movement of the pointer; identify a touch size of the pointer, based on light transmitted and obtained by the optical sensor while the pointer is moved; and adjust a width of at least a portion of the image displayed on the screen, based on a variation in the touch size of the pointer.

According to an embodiment, not falling under the scope of the appended claims, the disclosure provides an apparatus including a processor, which may be configured to: detect touch positions and touch sizes of a pointer on a screen of a display, while the pointer is moving, and cause a display to draw a line on the screen along detected touch positions of successive touches. The drawn line may vary in width based on the detected touch sizes.

According to an embodiment, not falling under the scope of the appended claims, the disclosure provides an apparatus including a processor, which may be configured to: detect touch positions and touch sizes of a pointer on a screen of a display, while the pointer is moving, and cause a display to draw a line on the screen along detected touch positions of successive touches, wherein the processor is further configured to adjust a width of the drawn line displayed on the screen of the display based on a variation in the detected touch sizes of the successive touches.

The processor may be further configured to detect the touch sizes based on at least one between a width and a height of a region touched by the pointer on the screen of the display.

### BRIEF DESCRIPTION OF THE DRAWINGS

The above and/or the aspects will become apparent and more readily appreciated from the following description of exemplary embodiments, taken in conjunction with the accompanying drawings, in which:
FIG. 1 illustrates a display apparatus according to an embodiment of the disclosure;
FIG. 2 is a block diagram of the display apparatus according to an embodiment of the disclosure;
FIG. 3 illustrates a touch sensor of a display apparatus according to an embodiment of the disclosure;
FIG. 4 illustrates a touch sensor of a display apparatus according to an embodiment of the disclosure;
FIG. 5 illustrates that a touch size is identified in a display apparatus according to an embodiment of the disclosure;
FIG. 6 illustrates a control method of a display apparatus according to an embodiment of the disclosure;
FIG. 7 illustrates an example of displaying images corresponding to touch sizes by a control method of a display apparatus according to an embodiment of the disclosure;
FIG. 8 illustrates an example of displaying images corresponding to touch sizes by a control method of a display apparatus according to an embodiment of the disclosure;
FIG. 9 illustrates conversion between a touch size and a pressure value in a display apparatus according to an embodiment of the disclosure;
FIG. 10 illustrates conversion between a touch size and a pressure value in a display apparatus according to an embodiment of the disclosure;
FIG. 11 illustrates a user interface for setting a touch size in a display apparatus according to an embodiment of the disclosure;
FIG. 12 illustrates a user interface for setting a touch size in a display apparatus according to an embodiment of the disclosure;
FIG. 13 illustrates a user interface for selecting a touch input mode in a display apparatus according to an embodiment of the disclosure;
FIG. 14 illustrates change in a width of an image in a display apparatus according to an embodiment of the disclosure; and
FIG. 15 is a flowchart showing a control method of a display apparatus according to another embodiment of the disclosure.

### DETAILED DESCRIPTION OF EXEMPLARY EMBODIMENTS

Below, exemplary embodiments will be described in detail with reference to accompanying drawings. In the drawings, like numerals or symbols refer to like elements having substantially the same function, and the size of each element may be exaggerated for clarity and convenience of description. However, the configurations and functions illustrated in the following exemplary embodiments are not construed as limiting the present inventive concept and the key configurations and functions. In the following descriptions, details about publicly known functions or features will be omitted if it is identified that they cloud the gist of the present inventive concept.

In the following exemplary embodiments, terms 'first', 'second', etc. are only used to distinguish one element from another, and singular forms are intended to include plural forms unless otherwise mentioned contextually. In the following exemplary embodiments, it will be understood that terms 'comprise', 'include', 'have', etc. do not preclude the presence or addition of one or more other features, numbers, steps, operation, elements, components or combination thereof. In addition, a 'module' or a 'portion' may perform at least one function or operation, be achieved by hardware, software or combination of hardware and software, and be integrated into at least one module. In the disclosure, at least one among a plurality of elements refers to not only all the plurality of elements but also both each one of the plurality of elements excluding the other elements and a combination thereof.

An aspect of the disclosure is to provide a display apparatus and a method of controlling the same, in which the display apparatus with a touch sensor identifies a touch size of an pointer on a screen, and a width of an image displayed along a trace of successive touches is varied in real time depending on the identified touch size.

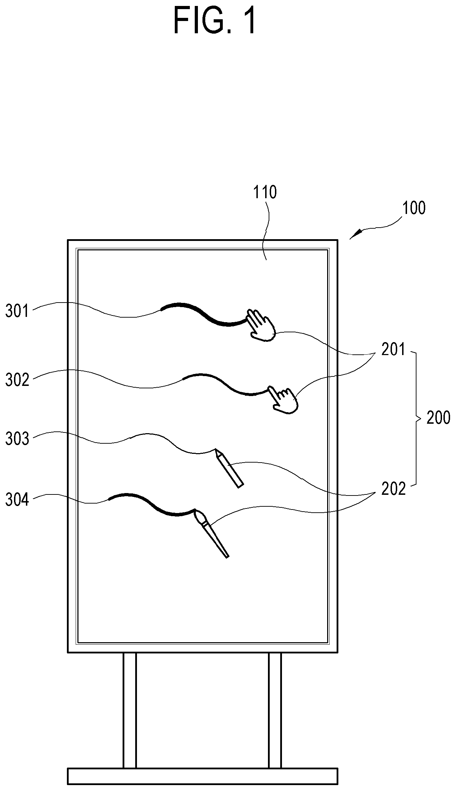

FIG. 1 illustrates a display apparatus according to an embodiment of the disclosure.

A display apparatus 100 according to an embodiment of the disclosure is, as shown in FIG. 1, embodied as a touch screen apparatus in which a predetermined pointer 200 is used to make a touch input on a screen of a display 100 for displaying an image.

There are no limits to the kind of pointer 200, and the pointer 200 according to an embodiment as shown in FIG. 1 may include at least one of: a part of a user's body 201 such as a thumb, one or more fingers, or a palm, etc. or various input devices 202 such as a pen, a brush (e.g., a painting brush). The pointer is capable of making pointing on the screen by, for example, performing a touch on the screen.

According to an embodiment, the input device 202 may include a passive type device, such as a general pen (e.g. a stylus) or a brush, which may have a shape extended in one direction (hereinafter, referred to as a passive pen), or an active type device which can autonomously generate a signal (hereinafter, referred to as an active pen).

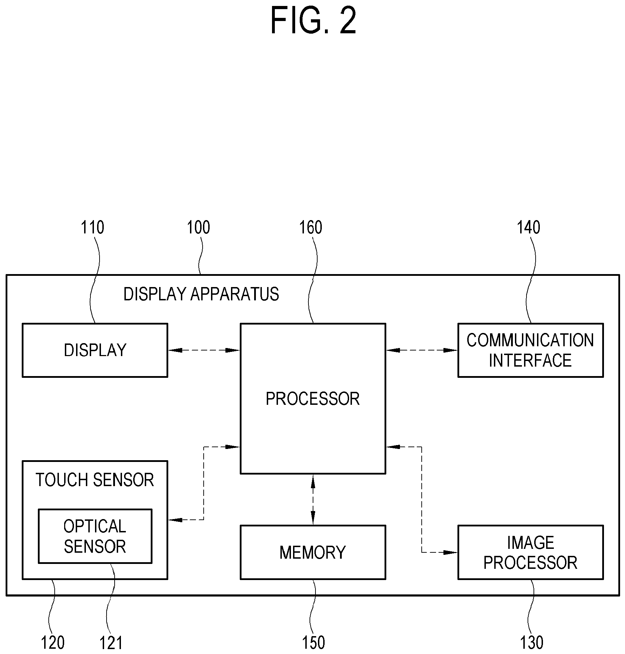

The passive pen's touch positions may be successively identified by a touch sensor 120 of the display apparatus 100 (to be described later, see FIG. 2) when one end of the passive pan (e.g., an end gripped by a user) touches the screen of the screen of the display 110. According to an embodiment, the passive pen may be configured to have two ends different in size (e.g., a difference between the width and height of a cross section).

The active pen may for example have a structure for generating an electromagnetic field at a tip, and thus its touch positions are successively identified in such a manner that the display apparatus 100 detects an electromagnetic field generated when the tip of the active pen (e.g., a tip portion gripped by a user touches (i.e., approaches or contacts)) the screen of the display 110.

In the display apparatus 100 according to an embodiment of the disclosure, a user does not need to buy an expensive dedicated pen having an IR sensor because there are no limits to the kinds of pointer 200.

A user may make a writing input or a drawing input on the screen of the display 110, as a touch input based on successive touches using the pointer 200. There are no limits to the kinds/types of successive touches, and various kinds of touches such as dragging in a predetermined direction, flicking, etc. may be included in the successive touches of the disclosure.

The display apparatus 100 successively displays images corresponding to the identified touch positions on the screen of the display 110. In other words, the display apparatus 100 may, as shown in FIG. 1, display images 301, 302, 303 and 304 at touch positions along a trace of a user's writing or drawing using the pointer 200 on the screen of the display 110.

The display apparatus 100 further identifies a touch size of the pointer 200 at a touch position in addition to the touch position of the pointer 200. Here, the display apparatus 100 may successively identify the touch sizes at the moving touch positions (e.g., successive touch positions) by the touch sensor 120 (to be described later).

The display apparatus 100 successively displays images corresponding to the touch positions and the touch sizes of the identified pointer 200 on the screen of the display 110. In other words, as shown in FIG. 1, the display apparatus 100 may display the images 301, 302, 303 and 304 at the identified touch positions along the trace of a user's writing or drawing using various pointers 200 different in a contact area with the screen (i.e. the touch size) on the screen of the display 110, in which the widths (or thicknesses) of the images 301, 302, 303 and 304 are adjusted corresponding to the touch sizes identified according to the pointers 200. Thus, a user can experience natural analog writing or drawing through the display apparatus 100 functioning as an interactive whiteboard.

According to an embodiment, when the pointer 200 is a brush, i.e., a general painting brush or a part of a user's body (e.g., a thumb, one or more fingers, a palm, or the like), the touch size may be varied based on one or more of a touch angle of the pointer 200, or a pressure given by a user toward the screen, etc.

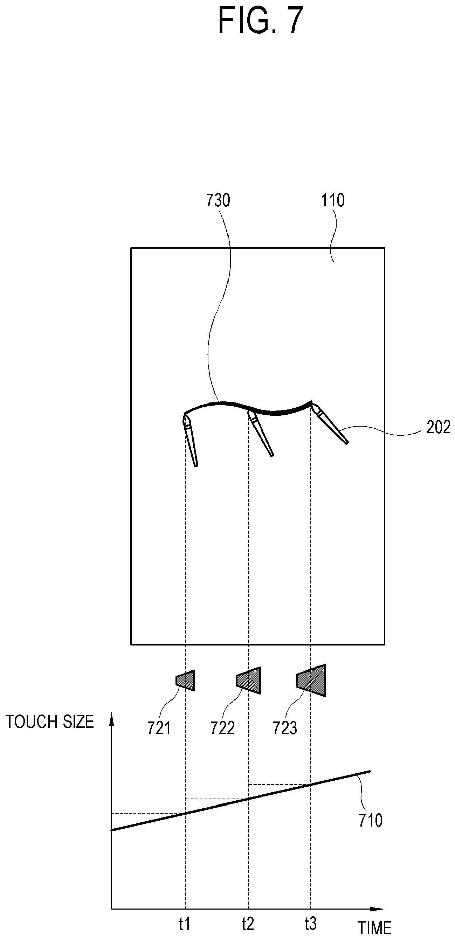

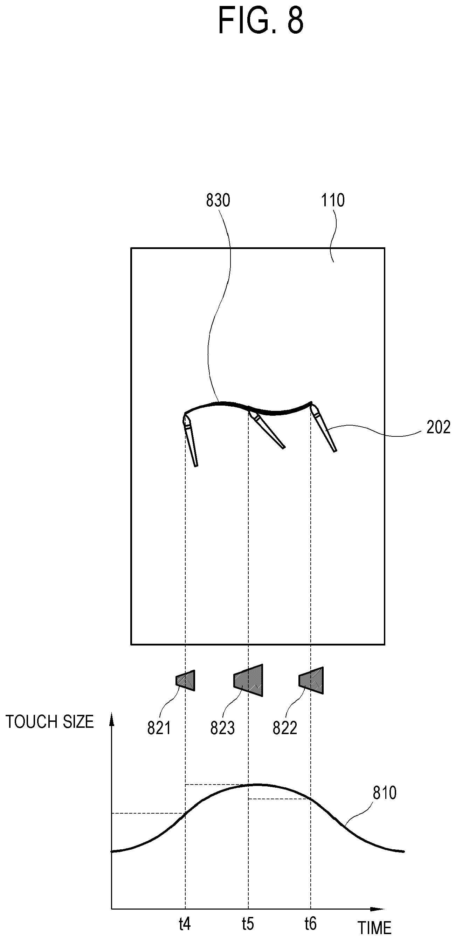

In the display apparatus 100 according to an embodiment of the disclosure, the foregoing variation in the touch size of the successive touches such as the writing input or the drawing input may be detected in real time, thereby adjusting the width of the displayed image in real time. Thus, the image may be displayed with the width freely varied depending on the trace of the successive touch inputs, so that a user can feel like directly writing/drawing on the screen of the display 110. In this regard, detailed embodiments will be described with reference to FIGS. 7 and 8.

The display apparatus 100 may be embodied as an interactive whiteboard (IWB) capable of receiving various touch inputs such as the writing input and the drawing input from a user, but there are no limits to the embodiment of the display apparatus 100. In other words, the display apparatus 100 may be embodied as various touch screen apparatuses, which supports the touch input based on the pointer 200 on the screen thereof, for example, the display apparatus may include one or more of: a television (TV), a monitor, a video wall, a tablet computer a smart pad, or a smartphone, etc.

FIG. 1 illustrates that the display 110 of the display apparatus 100 embodied as the interactive whiteboard may be in a portrait mode by way of example, or, as another example, the display 110 may be in a landscape mode with a rotatable structure.

The display apparatus 100 embodied as the interactive whiteboard may include a separate main body connectable to the display 110 by a wire or wirelessly, so that an image can be displayed on the display 110.

The display apparatus 100 may include a single display 110. However, the display apparatus 100 according to the disclosure may include a plurality of displays (e.g., panels arranged in a matrix form) to achieve a large screen.

The display apparatus 100 may be provided to function as the interactive whiteboard by executing a built-in predetermined application.

When the display apparatus 100 is the TV, the display apparatus 100 may receive and process broadcast content based on at least one of a broadcast signal, broadcast information and broadcast data obtained from, for example, a transmission by a broadcasting station. The display apparatus 100 may wirelessly obtain a radio frequency (RF) signal (e.g., a broadcast signal from the broadcasting station). To this end, the display apparatus 100 may include an antenna configured to obtain a broadcast signal, and a tuner configured to be tuned to a channel corresponding to a broadcast signal. The display apparatus 100 may obtain a broadcast signal through one or more of: a terrestrial wave, a cable, a satellite, etc., and a signal source is not limited to the broadcasting station. In other words, any apparatus or station capable of transmitting/receiving data may be involved in a source apparatus according to the disclosure.

The display apparatus 100 may operate as a smart TV or an Internet Protocol (IP) TV. The smart TV may refer to a TV that is capable of obtaining and displaying a broadcast signal in real time, has a web browsing function so that various pieces of content can be searched and consumed through the Internet (e.g., while the broadcast signal is displayed in real time), and provides a convenient user environment for the web browsing function. Further, the smart TV may include an open-source software platform and thus may provide an interactive service to a user. Accordingly, the smart TV may provide a user with various pieces of content, for example, an application for providing a predetermined service through the open-source software platform. Such an application may refer to an application program for providing various kinds of service, and may for example include applications for providing services such as one or more of: a social network service, finance, news, weather, a map, music, a movie, a game, or an electronic book, etc.

The signal obtained in the display apparatus 100 may have various formats corresponding to the types of the apparatus. For example, the data may be obtained by a wire based on one or more of: a high definition multimedia interface (HDMI), a digital visual interface (DVI), a display port (DP), a D-sub, a Composite video, a Component video, a Super video, a Syndicat des Constructeurs d'Appareils Radiorecepteurs et Téléviseurs (SCART), or a universal serial bus (USB), etc.

Further, the display apparatus 100 may obtain data from various external apparatuses such as a server or a source apparatus through wireless communication. There are no limits to the kinds of wireless communication, and the display apparatus 100 may perform at least one of the wireless communication using an access point (AP) or the wireless communication for direct connection without the AP. For example, the display apparatus 100 may exchange data with the external apparatus through one or more of: Wi-Fi, Wi-Fi Direct, or Bluetooth, or the like wireless communication.

Below, the elements of the display apparatus according to an embodiment of the disclosure will be described with reference to the accompanying drawings.

FIG. 2 is a block diagram of the display apparatus according to an embodiment of the disclosure.

The display apparatus 100 according to an embodiment of the disclosure, as shown in FIG. 2, may include the display 110, the touch sensor 120, an image processor 130, a communication interface 140, a memory 150, and a processor 160.

The elements included in the display apparatus 100 are not limited to the foregoing embodiment, but may exclude or change some elements or may include other additional elements.

For example, the display apparatus 100 may further include a user input unit embodied as a keypad (or an input panel) installed in a certain region of the front or lateral side thereof. The input unit may include one or more of: a power key, a menu key, or a like button to obtain a user's input. According to an embodiment, the user input unit may include an input device (e.g., one or more of a remote controller, a mouse, a keyboard, or a smartphone installed with an application for remotely controlling the display apparatus 100, etc.) which may generate a one or more of a command, data, information, or a signal previously set for remotely controlling the display apparatus 100 and may transmit it to the display apparatus 100. The user input unit may be a voice input unit such as a microphone which obtains a voice or sound (e.g., a voice or sound uttered by a user). The display apparatus 100 may obtain a signal corresponding to a user input from a remote input device through the communication interface 140 (to be described later).

The display 110 may be actualized by various display types, for example, one or more of: liquid crystal, plasma, a light emitting diode, an organic light emitting diode, a surface-conduction electronemitter, a carbon nano-tube, or a nano-crystal, etc. without limitations.

The display 110 may include a display panel forming a screen on which an image is displayed, and may further include an additional element (e.g., a driver) according to the types. The driver may include one or more driver integrated circuits (IC), and may output an electric signal for driving an electronic device or the like forming a light source or a screen so that an image can be displayed on the display 110 based on the signal obtained from the image processor 130.

The touch sensor 120 may identify the touch position and the touch size of the point 200 when a user' touch using the pointer 200 is made on the screen of the display 110.

The touch sensor 120 may include an optical sensor 121 for transmitting and obtaining light, and may identify the touch position and the touch size of the pointer 200 based on the light transmitted and obtained by the optical sensor 121. Here, the optical sensor 120 may be, for example, embodied as an IR sensor configured to transmit and obtain IR light having straightness. However, the embodiment of the touch sensor 120 according to the disclosure is not limited to the IR sensor, and the SAW sensor may, for example, be included in the touch sensor 120 according to the disclosure.

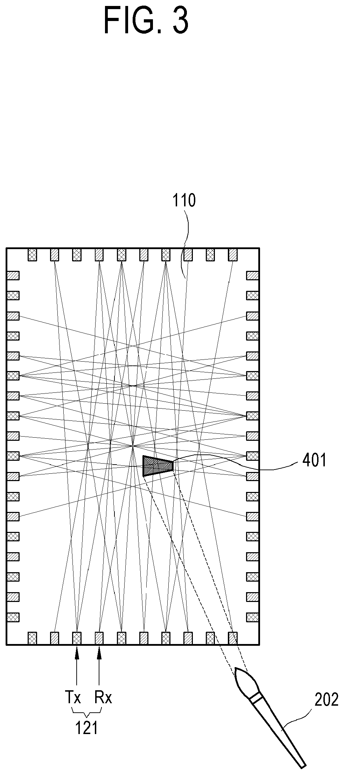

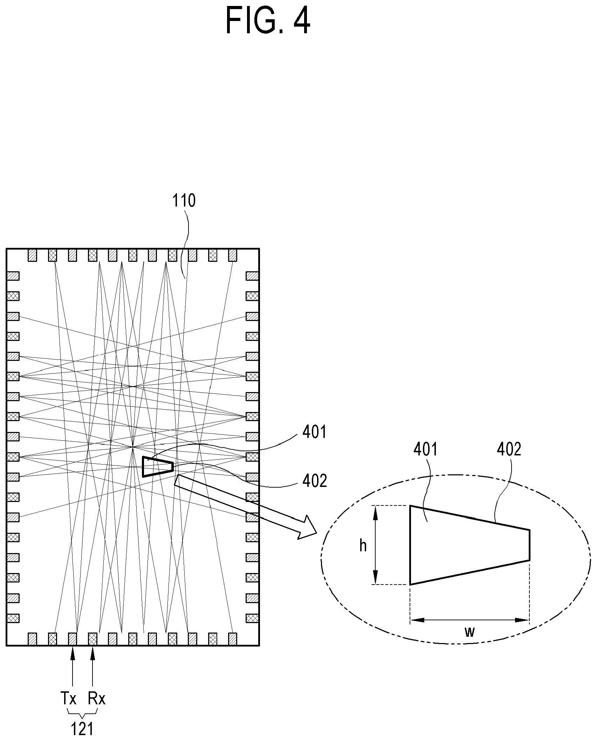

FIGS. 3 and 4 illustrate a touch sensor of a display apparatus according to an embodiment of the disclosure.

The optical sensor 121 includes a plurality of light transmitters (or light emitting devices) Tx to emit the IR light, and a plurality of light receivers (or light receiving devices) Rx to receive the light from the light transmitter Tx.

As shown in FIG. 3 and FIG. 4, the plurality of light transmitters Tx and the plurality of light receivers Rx are arranged around the display 110, (e.g., arranged around the panel and face with each other). In other words, the plurality of light transmitters Tx and the plurality of light receivers Rx may be arranged along the edge of the screen, so that the IR light can be transmitted and obtained between the plurality of light transmitters Tx and the plurality of light receivers Rx as shown in FIG. 3 and FIG. 4.

The optical sensor 121 may form a matrix in front of the screen of the display 110 with the light transmitted and obtained between the plurality of light transmitters Tx and the plurality of light receivers Rx as described above.

According to the disclosure, the form where the plurality of light transmitters Tx and the plurality of light receivers Rx are installed/arranged is not limited to those shown in FIG. 3 and FIG. 4. For example, the optical sensor 121 may be embodied in such a manner that the light transmitters Tx are arranged at the upper and left edges of the screen of the display 110, and the light receivers Rx are arranged at the lower and right edges.

In the display apparatus 100, based on the pointer 200 (e.g., input device 202) touching a specific position on the screen as shown in FIG. 3, the IR light output from the light transmitter Tx is blocked by the pointer 200 in a region 401 touched with the pointer 200 and thus the output level of the blocked region is lowered. Therefore, it is possible to obtain coordinate information of the touched region 401. The coordinate information may be obtained as coordinate values (x, y) corresponding to an x coordinate and a y coordinate, respectively.

The processor 160 may identify the touch position and touch size of the pointer 200, based on the obtained coordinate information.

According to an embodiment, the processor 160 may identify the touch position based on the representative coordinate values corresponding to the center of the touched region 401.

The processor 160 may employ various methods to identify the touch size.

According to an embodiment, as shown in FIG. 3 and FIG. 4, the processor 160 may recognize the outer points 402 of the touched region 401 to calculate the area where the touch input occurs, and thus identify the touch size based on the calculated area.

Alternatively, the processor 160 may identify the touch size based on at least one between the width w and the height h of the touched region 401.

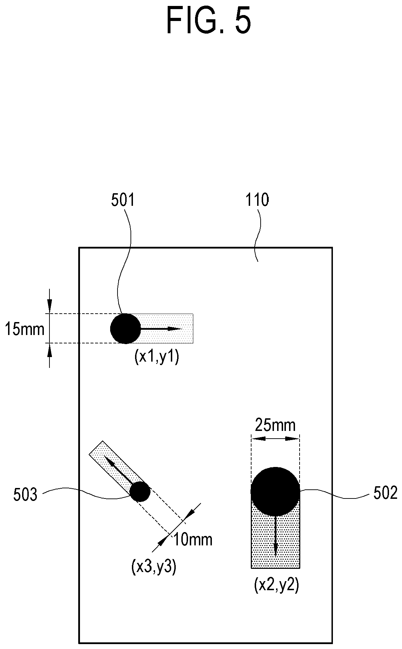

FIG. 5 illustrates that a touch size is identified in a display apparatus according to an embodiment of the disclosure.

According to an embodiment, the processor 160 may adjust the width (i.e., thickness) of the image displayed on the screen to correspond to at least one between the width w and the height h of the region 501 or 502.

Referring to FIG. 5, based on detecting that the pointer 200 touches a first region 501, the processor 160 may obtain coordinate information corresponding to the touched region 501, based on the light transmitted and obtained by the optical sensor 121. The processor 160 may identify the touch position with predetermined coordinate values (x1, y1) based on the obtained coordinate information, and identify the touch size with a value (e.g., 15mm) based on the height h1 of the touched region 501. The processor 160 may adjust the width (or thickness) of the image displayed at the touch position (x1, y1) on the screen of the display 110 to correspond to the touch size (e.g., 15mm).

Based on detecting that the pointer 200 touches a second region 502, the processor 160 may obtain coordinate information corresponding to the touched region 502, based on the light transmitted and obtained by the optical sensor 121. The processor 160 may identify the touch position with predetermined coordinate values (x2, y2) based on the obtained coordinate information, and identify the touch size with a value (e.g., 25mm) based on the width w2 of the touched region 502. The processor 160 may adjust the width (or thickness) of the image displayed at the touch position (x2, y2) on the screen of the display 110 to correspond to the touch size (e.g., 25mm).

Alternatively, the processor 160 may identify the touch size based on information about the width w and the height h of a touched region 503, and adjust the width (or thickness) of the image displayed on the screen.

Referring to FIG. 5, based on detecting that the pointer 200 touches a third region 503, the processor 160 may obtain coordinate information corresponding to the touched region 503, based on the light transmitted and obtained by the optical sensor 121. The processor 160 may identify the touch position with predetermined coordinate values (x3, y3) based on the obtained coordinate information, and identify the touch size (e.g., identified as 10mm) based on values (e.g., 7m, and 7m) corresponding to the width w3 and height h3 of the touched region 503. The processor 160 may adjust the width (or thickness) of the image displayed at the touch position (x3, y3) on the screen of the display 110 to correspond to the touch size (e.g., 10mm).

The image processor 130 may generate an image signal so that an image can be displayed in the touched region by the pointer 200 on the screen, based on the touch position and the touch size caused by the pointer 200.

The image signal processed by the image processor 130 may be transmitted to the display 110, and the display 110 may be driven by the image signal to display an image on the screen.

The image signal processed by the image processor 130 may be based on data stored in the memory 150, which may be a nonvolatile storage 150 such as a flash memory, or a hard disk drive, etc.

According to an embodiment, based on a touch position of the pointer 200 being successively moved (e.g., like a writing input or a drawing input), an image signal may be generated to display an image of which a width is successively adjusted corresponding to an identified touch size along a trace of the successive touch positions.

The display apparatus 100 may display the image, of which the width is successively adjusted corresponding to the touch sizes of the pointer 200 along the trace of the successive touch positions moved as described above, on the screen of the display 110, thereby allowing a user to experience an analog input of directly writing or drawing on the screen.

The image processor 130 may process an image (e.g. a writing image or a drawing image) displayed on the screen of the display 110, and generate an image file having a predetermined corresponding format. The generated image file may be stored in the memory 150, or may be transmitted to at least one external apparatus through the communication interface 140 so as to be shared (e.g., among participants in a meeting, a class, etc.).

When the display apparatus 100 is an apparatus capable of obtaining and processing content like a TV or a monitor, the image processor 130 may perform various preset video/audio processes with regard to an image signal of content. The image processor 130 may output a signal generated or combined by performing the processes to the display 110, thereby displaying an image corresponding to the output signal on the screen.

Here, the image processor 130 may include a decoder configured to decode an image signal to correspond to an image format of the display apparatus 100, and a scaler configured to adjust the image signal to match the output resolution of the display 110. The decoder may for example be embodied as a moving picture experts group (MPEG) decoder, and there are no limits to the kinds of content to be processed by the image processor 130 in the disclosure. For example, the content to be processed by the image processor 130 may include not only a moving image such as a video but also a still image such as a picture.

The image processor 130 may be embodied as a group of individual elements for independently performing such processes, or embodied as included in a main system-on-chip (SoC) where many functions are integrated. The main SoC may further include the processor 160 embodied as at least one microprocessor or central processing unit (CPU).

The image processor 130 may be embodied as a printed circuit board (PCB) where various chipsets, memories, electronic parts, wirings and the like circuit elements are mounted on a board to carry out such processes. In the display apparatus 100, both the image processor 130 and the processor 160 may be provided in a single board. Of course, this is merely an example, and the image processor 130 and the processor 160 may alternatively be provided in a plurality of PCBs connected to each other for communication.

The communication interface 140 may perform wired or wireless communication with at least one external apparatus.

When the display apparatus 100 is embodied as the interactive whiteboard, an external apparatus to be subjected to communication with the communication interface 140 may include an active pen capable of autonomously generating a signal. The active pen may include a sensor for detecting an IR signal, and the display apparatus 100 may wirelessly obtain position data, which is generated based on the IR signal detected by the sensor of the active pen, from the active pen through the communication interface 140.

Further, the communication interface 140 may transmit an image file having a predetermined format, into which an image (e.g. a writing image or a drawing image) displayed on the screen of the display 110 may be processed, to one or more external apparatuses.

The communication interface 140 may be embodied as a communication circuitry including communication modules (e.g., a software (S/W) module, a chip, etc.) corresponding to various communication protocols.

The communication interface 140 may include a wireless local area network (WLAN) interface. The WLAN interface may wirelessly be connected to the external apparatus through an AP under control of the processor 160. The WLAN interface may include a Wi-Fi communication interface.

The communication interface 140 may include a short-range communication interface that supports wireless direct communication between the display apparatus 100 and the external apparatus without the AP. The short-range communication interface may support at least one among Wi-Fi direct, Bluetooth, Bluetooth low energy, RF communication, IR data association (IrDA), Zigbee, ultra-wideband (UWB), or near field communication (NFC). Based on the display apparatus 100 performing direct communication with the external apparatus, the memory 150 may store address information (e.g. media access control (MAC) address or IP address) about the external apparatus to be subjected to the communication.

In the display apparatus 100, the communication interface 140 may be provided to perform the wireless communication with the external apparatus through at least one of the WLAN interface or the short-range communication interface according to performance.

The communication interface 140 may include Ethernet or the like wired communication interface. According to still another embodiment, the communication interface 140 may include one or more communication interfaces based on various communication methods such as long-term evolution (LTE) and the like mobile communication, electromagnetic (EM) communication involving a magnetic field, visible light communication, or soundwave communication, etc.

The communication interface 140 may include a connector via which the display apparatus 100 and the external apparatus are connected by a wire.

The connector may be embodied as a communication circuitry including data input/output interfaces where communication interfaces (e.g., a S/W module, a chip, etc.), a port, etc. are combined corresponding to various communication protocols.

The connector may be embodied in various forms corresponding to standards of signals obtained in the display apparatus 100, and may be for example configured to transmit and obtain data by a wire through one or more of: the HDMI, the DVI, the DP, the D-sub, the Composite video, the Component video, the Super video, the SCART, or the USB, etc.

When the display apparatus 100 is a TV, the communication interface 140 may obtain content from a source apparatus.

The memory 150 may be configured to store various pieces of data of the display apparatus 100. The memory 150 may be actualized by a nonvolatile memory (or a writable ROM) which can retain data even though the display apparatus 100 is powered off, and mirror changes. That is, the memory 150 may be provided as at least one among a flash memory, an electrically programmable ROM (EPROM) or an electrically erasable and programmable ROM (EEPROM). The memory 150 may further include a volatile memory a dynamic random access memory (DRAM) or a static RAM (SRAM), of which reading or writing speed for the display apparatus 100 is faster than that of the nonvolatile memory.

Data stored in the memory 150 may for example include not only an operating system (OS) for driving the display apparatus 100 but also one or more of: various software, programs, applications, image data, or appended data, etc. executable on the OS.

The memory 150 may be configured to store an application for functioning as the interactive whiteboard.

The memory 150 may be configured to store an image file having a predetermined format, into which an image (e.g. a writing image or a drawing image) displayed on the screen of the display 110 may be processed.

The memory 150 may be configured to store graphic data obtained from the outside in the display apparatus 100 or autonomously provided by the display apparatus 100. The graphic data may be output to the display 110 as an image signal processed by the image processor 130, and may be displayed as graphics such as one or more of: an on-screen display (OSD), or a graphic user interface (GUI, hereinafter also referred to as "user interface (UI)"), etc. in a certain area on the screen.

The processor 160 may perform control for operating general elements of the display apparatus 100.

Specifically, the processor 160 may identify the touch position of the pointer 200 on the screen, based on the light transmitted and obtained by the optical sensor 121 provided as the touch sensor 120, and may control the image processor 130 to display an image on the screen along the successive touch positions (also referred to as the moving touch position) as the touch position of the identified pointer 200 is moved. Here, the processor 160 may identify the touch size of the pointer 200 based on the light transmitted and obtained while the touch position is moved, and control the image processor 130 to adjust the width (or thickness) of at least a portion of the image displayed on the screen corresponding to a variation in the identified touch size of the pointer 200.

The processor 160 may perform control to operate general elements of the display apparatus 100. The processor 160 may execute a control program (or an instruction) for performing such control operations. The processor 170 may include at least one universal processor that loads at least a part of a control program from a nonvolatile memory, in which the control program is installed, to a volatile memory, and executes the loaded control program, and may for example be actualized by one or more of: a central processing unit (CPU), an application processor (AP), or a microprocessor.

The processor may include a single core, or multiple core (e.g., a dual core, a triple core, or a quad core, or the like multiple core). The processor may include a plurality of processors, for example, a main processor and a sub processor that operates in a sleep mode (during which only standby power is supplied without operation of the display apparatus). Further, the processor, the ROM, and the RAM may be connected to one another through an internal bus, and the ROM and the RAM may belong to the memory 150.

In the disclosure, the processor, as an example of the processor 160, may be actualized as included in the main SoC mounted to the PCB internally provided in the display apparatus 100. Alternatively, the main SoC may further include the image processor 130.

The control program may include a program(s) achieved by at least one of a basic input/output system (BIOS), a device driver, an OS, a firmware, a platform, or an application. According to an exemplary embodiment, the application may be previously installed or stored in the display apparatus 100 based on the display apparatus 100 being manufactured, or may be installed in the display apparatus 100 on the basis of application data obtained from the outside based on it being required in the future. The application data may for example be downloaded from an external server such as an application market to the display apparatus 100. Such an external server is merely an example of the computer program product according to the disclosure, but not limited thereto.

The operation of the processor 160 may be actualized by a computer program stored in the computer program product (not shown) provided separately from the display apparatus 100. In this case, the computer program product may include a non-transitory computer readable medium or a memory in which an instruction corresponding to a computer program is stored. The computer program product may also include a processor. Based on the instruction being issued by the processor, an image may be displayed on the screen along the moving touch position (successive touch positions) of the pointer 200, the touch size of the pointer 200may be identified based on the light transmitted and obtained while the touch position is moved, and the width of the image displayed on the screen may be adjusted corresponding to the variation in the identified touch size.

Accordingly, the display apparatus 100 may download and execute the computer program stored in a separate computer program product and perform the operation of the processor 160.

Further, the operation of the processor 160 may be carried out by a computer-readable program stored in the recording medium. The program (i.e. data stored in the recording medium) may be directly accessed and executed by the processor 160, or may be downloaded into the display apparatus 100 via a transmission medium actualized by a wired/wireless network in which the computer systems are connected to one another and executed, thereby carrying out operation.

Below, embodiments of adjusting a width of an image displayed on a screen in a display apparatus 100 according to the disclosure will be described with reference to the accompanying drawings.

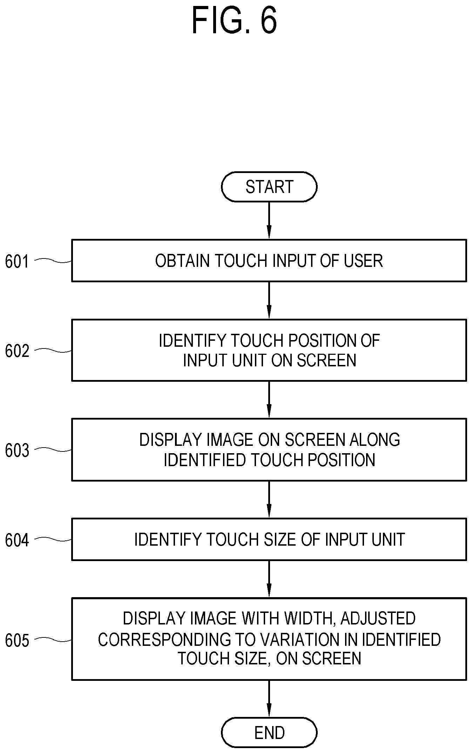

FIG. 6 illustrates a control method of a display apparatus according to an embodiment of the disclosure. FIGS. 7 and 8 illustrate examples of displaying images corresponding to touch sizes by a control method of a display apparatus according to an embodiment of the disclosure.

As shown in FIG. 6, a display apparatus 100 obtains a user's touch input made on the screen of the display 110 by using a predetermined pointer 200 (601). Here, the obtained touch input may include successive touches (e.g. a writing input or a drawing input) corresponding to moving touch positions on the screen, by using the pointer 200. The pointer 200 may comprise one or more of: a part of a user's body 201 such as a thumb, one or more fingers, or a palm, etc.) or a device 202 such as a brush (e.g. a painting brush).

Based on a user's touch input being made on the screen in the operation 601, the display apparatus 100 identifies the touch position of the pointer 200 on the screen of the display 110 (602). As shown in FIG. 3 and FIG. 4, the display apparatus 100 includes the optical sensor 120 for transmitting and obtaining light to scan the screen of the display 110, the processor 160 may identify the touch position (i.e. coordinate values) of the pointer 200 on the screen, based on the light transmitted and obtained by the optical sensor 120.

The display apparatus 100 displays an image on the screen of the display 110 according to the touch positions identified in the operation 602 (603). Based on the successive touches (e.g. a writing input or a drawing input) using the pointer 200 being made on the screen in the operation 601, the processor 160 may display an image 730 or 830 (e.g. the writing image or the drawing image) on the screen of the display 110 according to the movement in the touch position of the identified pointer 200. In other words, as shown in FIG. 7 and FIG. 8, the image 730 or 830 may be displayed corresponding to the touch position moving on the screen of the display 110 along the trace that a user writes or draws on the screen with the pointer 200.

The processor 160 of the display apparatus 100 identifies the touch size of the pointer 200 on the screen (604). As described with reference to FIG. 3 and FIG. 4, the processor 160 may identify the varying touch size of the pointer 200, based on the light transmitted and obtained by the optical sensor 120 while the touch position is moving according to the successive touches obtained in the operation 601. The processor 160 may employ various methods to identify the touch size. For example, as described with reference to FIG. 5, the touch size may be identified based on at least one between the width w and the height h of the region touched by the pointer 200 on the screen.

The processor 160 may display the image displayed on the screen of the display 110 by adjusting the width of the image based on variation in the touch size identified in the operation 604 (605). Based on the successive touches (e.g. a writing input or a drawing input) varied in angle of the pointer 200 or pressure against the screen are obtained on the screen in the operation 601, the processor 160 may display the image 730 or 830 (e.g. the writing image or the drawing image), the width of which is adjusted corresponding to the variation in the touch size based on the movement of the touch position of the pointer 200, on the screen of the display 110. In other words, as shown in FIG. 7 and FIG. 8, the writing or drawing image 730 or 830, the thickness of which is varied, may be displayed at the moving touch positions on the screen of the display 110 along the trace that a user uses the pointer 200 to write or draw on the screen.

Specifically, referring to FIG. 7, a user employs a brush or the like device 202 as the pointer 200 to make a user input of writing or drawing in the form 710 of increasing the touch size of the pointer 200 on the screen of the display 110. For example, when a user writes or draws while naturally changing the angle of the device 202 to the screen, it is identified that the touch sizes 721, 722 and 723 of the pointer 200 are different from one another, i.e. gradually increased at points t1, t2 and t3 in time. Therefore, the width (thickness) of the image (i.e. the writing image or the drawing image) 730 may be gradually increased as shown in FIG. 7, and displayed on the screen of the display 110.

Likewise, referring to FIG. 8, a user may employ the brush or the like device 202 as the pointer 200 to make a user input of writing or drawing in the form 810 of varying the touch size of the pointer 200 on the screen of the display 110. For example, based on a user writing or drawing while naturally changing the angle of the device 202 to the screen, it may be identified that the touch sizes 821, 822 and 823 of the pointer 200 are different from one another (e.g., increased and then decreased at points t4, t5 and t6 in time). Therefore, the image (the writing image or the drawing image) 730, the width (thickness) of which is gradually increased as shown in FIG. 7, may be displayed on the screen of the display 110. Therefore, the image (i.e. the writing image or the drawing image) 830, the width (thickness) of which is increased and then decreased as shown in FIG. 8, may be displayed on the screen of the display 110.

According to an embodiment of the disclosure, the display apparatus 100 may display the image (i.e. the writing image or the drawing image), the width of which is dynamically varied along the trace of the successive touch inputs like a case where a user directly writes or draws on the screen of the display 110, on the screen of the display 110, thereby allowing a user to experience natural analog writing or drawing.

According to an embodiment, based on an image based on successive touch inputs being displayed as described above, the display apparatus 100 may represent the width (or thickness) of the image as the number of pixels corresponding to the actual touch size of the pointer 200 according to the size and resolution of the display 110, i.e. the panel.

The display apparatus 100 may identify a pixel size (e.g., 1 pixel area) based on the size and resolution of the display panel 110 as shown in the following Table 1.

**[Table 1]**

| Size | Active area(mm) | | Resolution (pixel) | | 1 Pixel area(mm) | |
|---|---|---|---|---|---|---|
| | H | V | H | V | H | V |
| 43 inches | 941.18 | 529.42 | 3840 | 2160 | 0.2451 | 0.2451 |
| 55 inches | 1209.6 | 680.4 | 3840 | 2160 | 0.315 | 0.315 |
| 75 inches | 1538.88 | 865.62 | 3840 | 2160 | 0.4008 | 0.4008 |

For example, a display of 43 inches (i.e. 43") has a length of 941.18mm in a horizontal direction H and a length of 529.42mm in a vertical direction V, and the number of pixels in the horizontal direction H is 3840 and the number of pixels in the vertical direction V is 2160. Therefore, sizes in the horizontal direction H and the vertical direction V per pixel are respectively 0.2451mm and 0.2451mm, thereby obtaining one pixel area of 0.2451×0.2451mm.

Likewise, even in a display of 55 inches (i.e., 55") and a display of 75 inches (i.e., 75"), sizes in the horizontal direction H and the vertical direction V per pixel may be identified as shown in Table 1. Table 1 shows the pixel sizes of three types of display by way of example, but the disclosure is applied regardless of the size/resolution of the display. Therefore, the pixel sizes may be identified with regard to the displays of various sizes/resolutions.

The processor 160 calculates the number of pixels corresponding to the touch size of the pointer 200 on the screen while allowing for the size of the display 110, and control the display 110 to display an image, the width of which is represented with the calculated number of pixels, in the touch position on the screen. In other words, the actual physical touch size of the pointer 200 is reflected in variation in the width (i.e., thickness) of the image in real time, and therefore the image is displayed very similarly to a case of writing or drawing with an actual brush.

The information about the number of pixels corresponding to the touch size calculated as described above is stored in the memory 150, and its example is given as shown in the following Table 2.

**[Table 2]**

| Size | The number of pixels based on touch size(mm) | | | | | | |
|---|---|---|---|---|---|---|---|
| | 2 | 5 | 10 | 15 | 20 | 25 | 30 |
| 43 inches | 8 | 20 | 41 | 61 | 82 | 102 | 122 |
| 55 inches | 26 | 65 | 130 | 194 | 259 | 324 | 389 |
| 75 inches | 65 | 162 | 323 | 485 | 646 | 808 | 969 |

For example, in the display apparatus 100 with the display 110 of 55 inches (i.e. 55"), based on the touch size of the pointer 200 on the screen being, for example, 10mm, the processor 160 may control the display 110 to make the image displayed in the touch position on the screen be represented with the width of, for example, 130 pixels. Further, in the display apparatus 100 with the display 110 of 55 inches (i.e. 55"), based on the touch size of the pointer 200 on the screen is, for example, 25mm, the processor 160 may control the display 110 to make the image displayed in the touch position on the screen be represented with the width of, for example, 324 pixels.

Table 2 shows, as an example, the number of pixels corresponding to the touch size by way of example in three types of display, but the disclosure is applied regardless of the size/resolution of the display. Therefore, the number of pixels may be identified with regard to the touch sizes in the displays having various sizes/resolutions. Further, Table 2 shows several touch sizes within a range of 2~30mm by way of example, and the touch size identified in the disclosure may be varied depending on the size, angle, etc. that the tip of the pointer 200 has. Thus, the touch size is not limited to that shown in Table 2.

Referring to FIG. 5, the processor 160 may make the width (or thickness) of the image displayed at the touch position (x1, y1) on the screen of the display 110 be represented with, for example, 194 pixels corresponding to the touch size of, for example, 15mm. Further, the processor 160 may make the width (or thickness) of the image displayed at the touch position (x2, y2) on the screen of the display 110 be represented with, for example, 324 pixels corresponding to the touch size of, for example, 25mm, and the width (or thickness) of the image displayed at the touch position (x3, y3) on the screen of the display 110 be represented with, for example, 130 pixels corresponding to the touch size of, for example, 10mm.

According to an embodiment, based on the touch position of the pointer 200 being successively moved like the writing input or the drawing input, the processor 160 may display an image, a width of which is successively adjusted based on the number of pixels corresponding to the identified touch size along the trace of the moving touch positions.

The display apparatus 100 may display an image, a width of which is based on the number of pixels corresponding to an actual physical touch size of the pointer 200 and is successively adjusted along the trace of the touch position moved as described above, on the screen of the display 110, so that the variation in the width (or the thickness) of the image can be represented very similarly to a case of writing or drawing with an actual brush or pen/pencil.

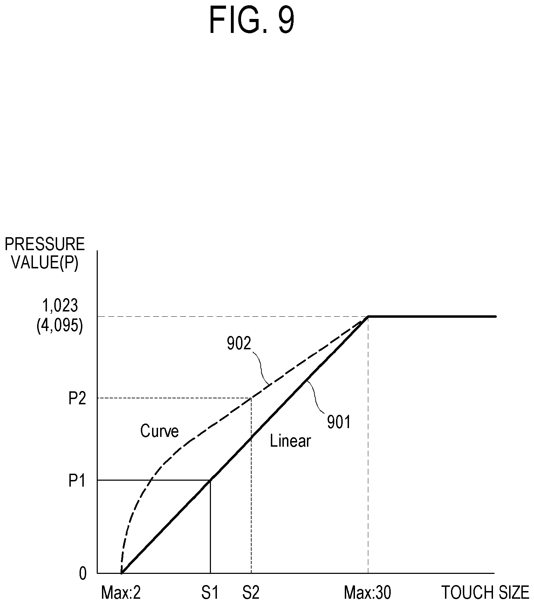

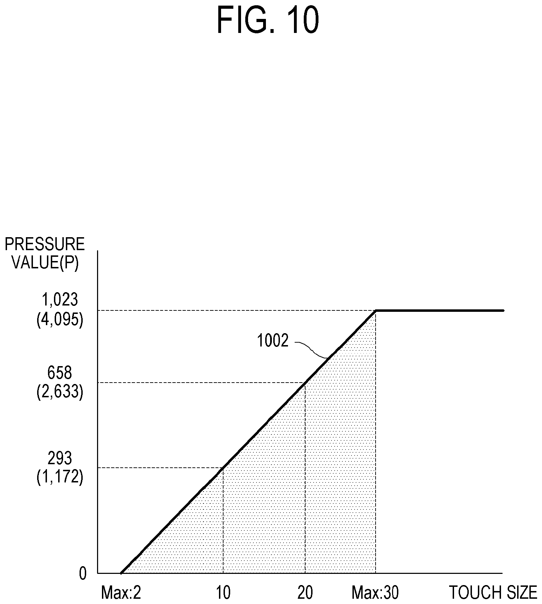

FIGS. 9 and 10 illustrate conversion between a touch size and a pressure value in a display apparatus according to an embodiment of the disclosure.

To display an image of which a width is varied depending on variation in a touch size of successive touches, the display apparatus 100 according to an embodiment of the disclosure may convert the identified touch size into a pressure value P, and may control the display 110 to display the image of which the width (or thickness) is adjusted based on the converted pressure value P. Thus, it is possible to use a function of an application designed to operate based on a resistive touch sensing method using the active pen.

Here, the processor 160 may normalize a touch size between the preset minimum and maximum values into a pressure value in an input-allowed range, thereby converting the touch size into the pressure value.

For example, based on the touch size identified between the minimum value and the maximum value ranges (e.g., 2 ~ 30mm) and the pressure value ranges (0 ~ 1,024 level), the processor 160 may convert a predetermined touch size S1 into a matching pressure value P1 based on a linear graph 901 showing a relation between the touch size and the pressure value as shown in FIG. 9.

Referring to the linear graph 1001 shown in FIG. 10, based on the touch size being identified as, for example, 10mm in a state that the range of the pressure value is set to, for example, 0 ~ 1,024 level, the touch size may be converted into the pressure value having a level of, for example, 293. Further, based on the touch size being identified as, for example, 20mm in a state that the range of the pressure value is set to, for example, 0 ~ 4,095 levels, the touch size may be converted into the pressure value having a level of, for example, 2,633.

As described above, based on the conversion between the touch size and the pressure value, the processor 160 may make the width of the image displayed at the touch position on the screen of the display 110 be adjusted corresponding to the converted pressure value.

Alternatively, based on the touch size identified by the minimum value and the maximum value ranges (e.g., 2 ~ 30mm) and the pressure value ranges (e.g., 0 ~ 4,095 level), the processor 160 may convert a predetermined touch size S2 into a matching pressure value P2 based on a curved graph 902 showing a relation between the touch size and the pressure value as shown in FIG. 9. The processor 160 may make the width of the image displayed at the touch position on the screen of the display 110 be adjusted corresponding to the converted pressure value P2. Here, the curved form is not limited to that shown in FIG. 9, but may have various forms according to the kinds of application using the pressure value.

The processor 160 may control the touch size identified by the optical sensor 121 to be converted into the pressure value based on the application using the pressure value being executed.

As the display apparatus 100 converts the identified touch size of the pointer 200 into the pressure value as described above, the application operating based on the resistive touch detection method using the active pen can be installed and executed even in the display apparatus 100 according to the disclosure with the optical sensor 121 scanning the screen of the display 110, and it is thus possible to use the function of the application.

Meanwhile, as shown in FIG. 9 and FIG. 10, based on the touch size of the pointer 200 given on the screen being, for example, 40mm under a condition that the maximum value of the touch size is set to, for example, 30mm, the processor 160 may control the image (e.g., the writing image or the drawing image) to be displayed on the screen of the display 110 while having a width of, for example, 30mm as the maximum value of the touch size. Further, in terms of conversion from the touch size into the pressure value, based on the touch size of the pointer 200 given on the screen being, for example, 40mm, the processor 160 may convert the maximum value of the touch size into a pressure value of, for example, 1,023 corresponding to, for example, 30mm, thereby controlling the image (e.g. the writing image or the drawing image) to be displayed on the screen of the display 110 while having a width corresponding to the matching pressure value.

The display apparatus 100 may be embodied to obtain a user input for setting an identifiable touch size.

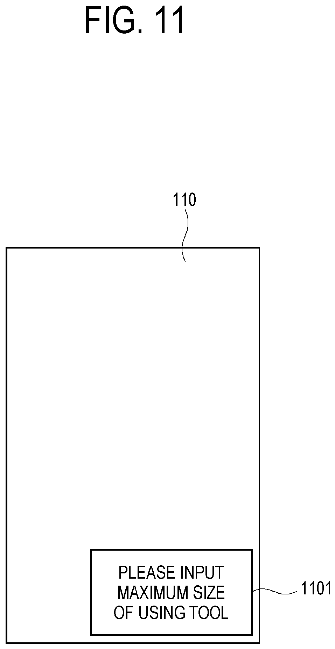

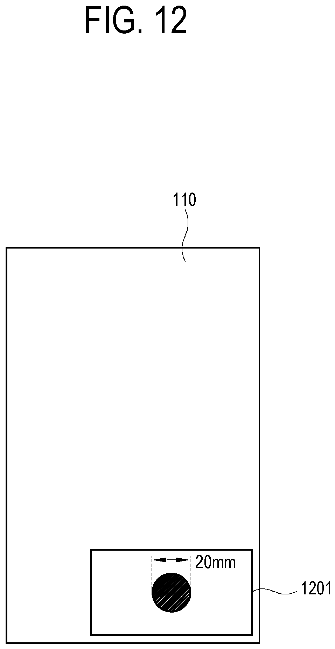

FIGS. 11 and 12 illustrate user interfaces (Ul) for setting a touch size in a display apparatus according to the present disclosure.

As shown in FIG. 11, the processor 160 may control a UI 1101, through which selection is allowed to be set or change the maximum value (i.e. the maximum size) for the touch size of the pointer 200, to be displayed in a certain region on the screen of the display 110.

Through the UI 1101 of FIG. 11, a user may make a user input to set or change the touch size identifiable by the display apparatus 100. Here, the user input for making selection in the UI 1101 may be obtainable in many ways. For example, the selection may be made by obtaining a touch input using the pointer 200 on the UI 1101, or controlling a user input unit including a remote input device in a state that the UI 1101 is selected.

Based on a user making a user input to set the touch size, the processor 160 may control a UI 1201, through which the maximum value (i.e. the maximum size) for the touch size of the pointer 200 can be input, to be displayed in a certain region on the screen of the display 110 as shown in FIG. 12. Here, the user input for inputting the maximum value of the touch size may be obtainable in many ways. For example, the user input may be achieved by directly writing the size or controlling a button of a user input unit including a remote input device such as a remote controller.

Based on the maximum value for the touch size of the pointer 200 being input (or changed) as described above, the processor 160 may adjust the width of the image displayed on the screen of the display 110 based on the change in the touch size of the pointer 200 within a range set by the input maximum value.

For example, as shown in FIG. 12, based on the touch size of the pointer 200 given on the screen being, for example, 25mm under a condition that the maximum value for the touch size is set to, for example, 20mm, the processor 160 may control the image (e.g. the writing image or the drawing image) to be displayed on the screen of the display 110 while having a width of, for example, 20mm as the maximum value of the touch size.

Meanwhile, in the display apparatus 100 according to an embodiment, it may further be possible to set a touch size for an eraser mode.

The processor 160 may control a Ul selectable for inputting a threshold value for operating the eraser mode, i.e. the minimum value (i.e. the minimum size) for the touch size of the pointer 200 to be displayed in a certain region on the screen of the display 110. Here, a specific size (e.g., 60mm, 70mm, or etc.) may for example be input as the minimum value for the touch size corresponding to the eraser mode, but the minimum value is not limited to this value.

Based on the threshold value for operating the eraser mode (i.e. the minimum value (i.e. the minimum size)) for the touch size of the pointer 200 being input (or changed), and the touch size of the identified pointer 200 being greater than the preset threshold value, the processor 160 may delete an image displayed on the screen of the display 110 based on movement of the touch position of the identified pointer 200.

In other words, based on the touch size of the identified pointer 200 being greater than the input minimum value, the processor 160 may identify the region touched by the pointer 200 based on the light transmitted and obtained by the optical sensor 121. Further, the processor 160 may perform an operation of deleting, i.e., erasing at least a portion of the image displayed in the identified region on the screen of the display 110. Thus, a user can utilize the writing/drawing function or the deletion/erasure function of the display apparatus by variously changing settings as necessary.

According to an embodiment, based on the touch input mode being selected and successive touch inputs being obtained using the pointer 200 based on the selected touch input mode, the display apparatus 100 may adjust the width of at least a portion of the image displayed on the screen of the display 110 based on the variation in the identified touch size.

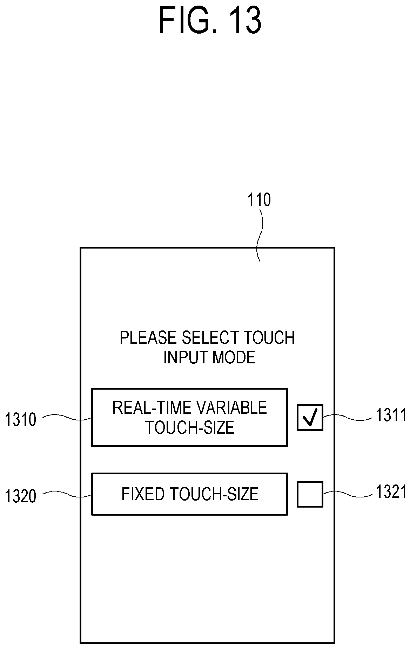

FIG. 13 illustrates a UI for selecting a touch input mode in a display apparatus according to the present disclosure.

As shown in FIG. 13, the touch input mode of the display apparatus 100 includes a real-time variable touch-size mode and a fixed touch-size mode, and the processor 160 may display the UI including menu items 1310 and 1320 for selecting one of the two modes on the screen of the display 110.

A user may select one of check boxes 1311 and 1321 respectively corresponding to the modes, so that the display apparatus 100 can operate in the selected mode.

Specifically, based on the real-time variable touch-size mode being selected, the processor 160 controls the display 110 to display an image having a width adjusted corresponding to variation in the touch size of the pointer 200. In other words, the writing image or the drawing image may be displayed with the width (or thickness) being varied corresponding to the identified touch size in the moving touch position on the screen of the display 110 along a trace that a user writes or draws on the screen with the pointer 200 until the pointer 200 on the screen of the display 110 is released from an initial touch.

On the other hand, based on the fixed touch-size mode being selected, the processor 160 controls the display 110 to display an image with a fixed width even though the touch size of the pointer 200 is varied. In other words, the writing image or the drawing image may be displayed with the width (or thickness) fixed corresponding to the initial touch in the moving touch position on the screen of the display 110 along a trace that a user writes or draws on the screen with the pointer 200 until the pointer 200 on the screen of the display 110 is released from the initial touch.

The display apparatus 100 may allow a user to select the touch input mode as described above and selectively experience the analog writing or drawing as necessary for a purpose.

The display apparatus 100 may control the display 110 to display an image with a changed width (or thickness) based on a touch input using the pointer 200 being maintained in a specific position on the screen of the display 110 for more than a predetermined period of time.

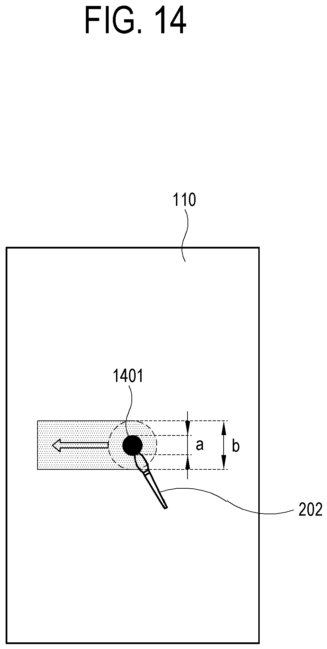

FIG. 14 illustrates a change in a width of at least a portion of an image in a display apparatus according to the present disclosure.

As shown in FIG. 14, based on a user continuing to touch a specific position 1401 on the screen of the display 110 with the pointer 200 for more than a predetermined period of time (e.g., 5 seconds, 7 seconds, etc.), the processor 160 may control the display 110 to change the width a of the image displayed corresponding to the identified touch size (e.g., to increase the width a of the image into a width b).

Then, based on the successive touches (e.g. a writing input or a drawing input) of moving the touch position on the screen being obtained by the pointer 200, the processor 160 may control the writing image or the drawing image with the increased width b to be displayed on the screen of the display 110 in accordance with the moving touch position. Here, based on detecting that the successive touch inputs are changed in the touch size, the processor 160 may control the display 110 to change the width of at least a portion of the image displayed on the screen in accordance with a rate of the change.

Therefore, in terms of displaying the writing image or the drawing image, the display apparatus 100 may display the writing image or the drawing image with a width (or thickness) larger than the identifiable touch size.

Alternatively, as shown in FIG. 14, based on a user continuing to touch a specific position 1401 on the screen of the display 110 with the pointer 200 for more than a predetermined period of time, the processor 160 may control the display 110 to change a color of the image (e.g., to increase brightness or saturation) without changing the width a of the image.

Then, based on the successive touches (e.g. a writing input or a drawing input) of moving the touch position on the screen being obtained by the pointer 200, the processor 160 may control the writing image or the drawing image with the width a and the changed color to be displayed on the screen of the display 110 in accordance with the moving touch position. Here, based on detecting that the successive touch inputs are changed in the touch size, the processor 160 may control the display 110 to change the width of at least a portion of the image displayed on the screen in accordance with a rate of the change.

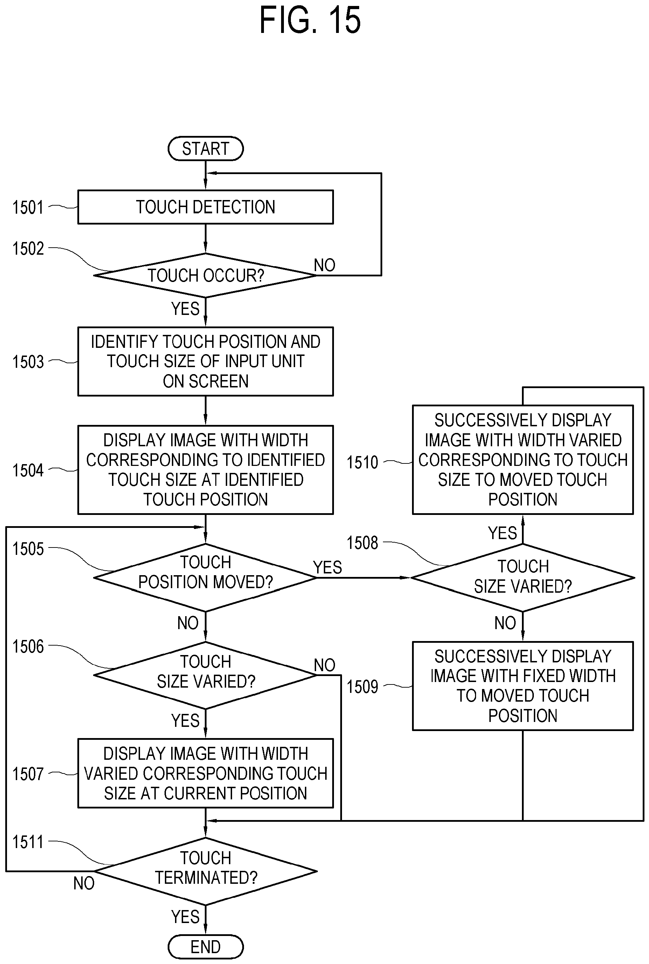

FIG. 15 is a flowchart showing a control method of a display apparatus according to another embodiment of the disclosure.

As shown in FIG. 15, the display apparatus 100 performs touch detection based on the optical sensor 121 provided as the touch sensor 120, arranged around the display 110 and transmitting and obtaining light (1501).

Based on the touch detection, the processor 160 identifies whether a touch occurs on the screen of the display 110 (1502). Here, the processor 160 may detect an initial touch based on the writing input, the drawing input or the like successive touches with the pointer 200.

Based on the touch occurring in the operation 1502, the processor 160 identifies the touch position and the touch size of the pointer 200 on the screen of the display 110 (1503). The processor 160 may identify a position at which the initial touch is made on the screen, and the touch size in the position.

The processor 160 controls an image having a width (or thickness) corresponding to the touch size identified in the operation 1503 in the touch position identified in the operation 1503 to be displayed on the screen of the display 110 (1504).

The processor 160 may identify whether the touch position identified in the operation 1503 is moved (1505). The processor 160 may identify whether the touch position is moved according to whether a successive touch following the initial touch is detected based on light transmitted and obtained by the optical sensor 121.

Based on identifying in the operation 1505 that the touch position is not moved, the processor 160 may identify whether the touch size identified in the operation 1503 is varied (1506). The processor 160 may identify whether the touch size is varied at the position identified in the operation 1503 based on the light transmitted and obtained by the optical sensor 121. For example, based on a user making the pointer 200 be in contact with a specific position on the screen of the display 110 and pressing the pointer against the screen, or changing the angle of the pointer 200, the processor 160 may identify that the touch size is varied.

Based on identifying in the operation 1506 that the touch size is varied, the processor 160 may control an image with a width varied corresponding to the touch size varied in the operation 1506 to be displayed at a touch position of the initial touch identified in the operation 1503, i.e. at the current position (1507). Therefore, the image with the width more increased or decreased than that of the image in the operation 1504 can be displayed on the screen of the display 110.

Based on identifying in the operation 1506 that the touch size is not varied, the processor 160 may detect whether the touch in the operation 1502 is terminated (1511). The processor 160 may detect the termination of the touch based on the initial touch in the operation 1502 being released, based on the light transmitted and obtained by the optical sensor 121.

Based on identifying in the operation 1505 that the touch position is moved, the processor 160 may identify whether the touch size identified in the operation 1503 is varied (1508). Like the operation 1506, the processor 160 may identify whether the touch size is varied at the position identified in the operation 1503, based on the light transmitted and obtained by the optical sensor 121. For example, based on a user making the pointer 200 being in contact with the screen of the display 110 be pressed against the screen, or based on the angle of the pointer 200 being changed, the processor 160 may identify that the touch size is varied.

Based on identifying in the operation 1508 that the touch size is not varied, the processor 160 may successively display an image with a fixed width from the touch position of the initial touch identified in the operation 1503 to the touch position moved in the operation 1505 (1509). Therefore, as shown in FIG. 1, the writing image or the drawing image based on the successive touches may be displayed on the screen of the display 110.

On the other hand, based on identifying in the operation 1508 that the touch size is varied, the processor 160 may display an image with a width varied depending on the touch size varied in the operation 1506, from the touch position of the initial touch identified in the operation 1503 to the touch position moved in the operation 1505 (1510). Therefore, as shown in FIGS. 7 and 8, the writing image or the drawing image based on the successive touches may be displayed with a continuously variable width on the screen of the display 110.

The processor 160 may identify whether the touch in the operation 1502 is terminated while displaying the images of the operations 1507, 1509 and 1510 (1511). The processor 160 may identify that the touch is terminated based on the initial touch in the operation 1502 being released, based on the light transmitted and obtained by the optical sensor 121. Therefore, the writing image or the drawing image, in which the movement of the touch position or the variation in the touch size is successively reflected, can be displayed on the screen of the display 110 until the writing input, the drawing input or the like successive touches are released from the initial touch.

As described above, the display apparatus 100 according to an embodiment of the disclosure may feed the image (e.g. the writing image or the drawing image), of which the width is freely variable along the trace of the successive touch inputs, back to the screen of the display 110, thereby allowing a user to feel like direct writing or drawing on the screen of the display 110.

Further, the width of the image is represented with the number of pixels corresponding to the actual touch size of the pointer 200 based on the size or resolution of the display 110, thereby allowing a user to experience more natural analog writing/drawing.

Further, the touch size of the identified pointer 200 may be converted into a pressure value, so that the display apparatus 100 can use a function of an application designed to operate in a resistive touch detection type apparatus using an active pen.

As described above, there are provided a display apparatus of the disclosure, a method of controlling the same, and a recording medium thereof, in which an image is controlled to be displayed with a width freely variable along a trace of successive touch inputs, thereby making a user experience direct writing or drawing on a screen.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus (100) comprising:
a display (110);
an optical sensor (121) comprising a plurality of light transmitters and a plurality of light receivers arranged around the display, facing each other and configured to transmit and obtain light; and
a processor (160) configured to:
identify a touch position of a pointer (200) on a screen of the display (110), based on light transmitted and obtained by the optical sensor (121),
identify a touch size of the pointer (200), based on light transmitted and obtained by the optical sensor (121), and
cause the display (110) to display an image corresponding to the identified touch size on the screen along touch positions of successive touches, based on movement of the pointer (200),
**characterized in that** the processor is configured to
identify the number of pixels corresponding to the identified touch size of the pointer (200), based on a size and a resolution of the display (110), and
adjust a width of at least a portion of the image displayed on the screen of the display (110) based on the identified number of pixels, and
wherein the processor (160) is further configured to:
based on a real-time variable touch-size mode being selected, cause the display (110) to display an image of which a width is varied corresponding to variation in the identified touch size of the pointer on the screen along touch positions of successive touches while the pointer is moved,
based on a fixed touch-size mode being selected, cause the display (110) to display an image with a width fixed corresponding to an initial touch of successive touches on the screen along touch positions of successive touches while the pointer is moved.

2. The display apparatus (100) according to claim 1, wherein
the optical sensor (121) is further configured to identify the variation in the touch size of the pointer (200) in the successive touches of the pointer (200), and
the processor (121) is further configured to adjust a width of a writing or drawing image displayed on the screen of the display (110) based on the variation in the identified touch size in the successive touches.

3. The display apparatus (100) according to claim 1, wherein the processor (160) is further configured to identify the touch size based on at least one between a width and a height of a region touched by the pointer (200) on the screen of the display (110).

4. The display apparatus (100) according to claim 1, wherein the optical sensor (121) is further configured to form a matrix in front of the screen of the display (110) with light transmitted and obtained between the plurality of light transmitters and the plurality of light receivers.

5. The display apparatus (100) according to claim 1, wherein the pointer (200) includes at least one of: a user's thumb, one or more fingers, or palm, or a passive type device including a pen or a brush.

6. The display apparatus (100) according to claim 1, wherein the processor (160) is further configured to convert the identified touch size into a pressure value, and adjust the width of the at least the portion of the image based on the converted pressure value.

7. The display apparatus (100) according to claim 1, wherein the processor (160) is further configured to adjust the width of the at least the portion of the image corresponding to the variation in the touch size, based on the identified touch size being within a preset range.

8. The display apparatus (100) according to any one of claims 1 to 7, wherein the processor (160) is further configured to control the image displayed on the screen to be deleted corresponding to the touch positions of the successive touches of the touch position of the pointer, based on the identified touch size being greater than a preset threshold value.

9. A method of controlling a display apparatus (100), the method comprising:
identifying a touch position of a pointer (200) on a screen of a display (110), based on light transmitted and obtained by an optical sensor (121) including a plurality of light transmitters and a plurality of light receivers arranged around the display (110), facing each other and configured to transmit and obtain light;
identifying a touch size of the pointer (200), based on light transmitted and obtained by the optical sensor (121),
displaying an image corresponding to the identified touch size on the screen along touch positions of successive touches, based on movement of the pointer (200);
**characterized in that** the identifying of the touch size comprises:
identifying the number of pixels corresponding to the identified touch size, based on a size and a resolution of the display (110), and
adjusting a width of at least a portion of the image displayed on the screen of the display (110) based on the identified number of pixels,
wherein the displaying the image further comprises:
based on a real-time variable touch-size mode being selected, displaying an image of which a width is varied corresponding to variation in the identified touch size of the pointer on the screen of the display (110) along touch positions of successive touches while the pointer is moved,
based on a fixed touch-size mode being selected, displaying an image with a width fixed corresponding to an initial touch of successive touches on the screen of the display (110) along touch positions of successive touches while the pointer is moved.

10. The method according to claim 9, wherein
the identifying of the touch size comprises identifying the variation in the touch size of the pointer (200) in the successive touches of the pointer, and
the adjusting of the width of the image comprises adjusting a width of a writing or drawing image displayed on the screen of the display (110) based on the variation in the identified touch size in the successive touches.

11. The method according to claim 9, wherein the identifying of the touch size comprises identifying the touch size based on at least one between a width and a height of a region touched by the pointer (200) on the screen of the display (110).

12. The method according to claim 9, further comprising:
converting the identified touch size into a pressure value; and
adjusting the width of the at least the portion of the image based on the converted pressure value.

13. The method according to any one of claims 9 to 12, wherein the adjusting of the width of the at least the portion of the image comprises adjusting the width of the at least the portion of the image corresponding to the variation in the touch size, based on the identified touch size being within a preset range.

## Patentansprüche

1. Anzeigevorrichtung (100), umfassend:
eine Anzeige (110);
einen optischen Sensor (121), der eine Vielzahl von Lichtsendern und eine Vielzahl von Lichtempfängern umfasst, die um die Anzeige herum angeordnet, einander zugewandt und dafür konfiguriert sind, Licht zu übertragen und zu empfangen; und
einen Prozessor (160), der konfiguriert ist, um:
eine Berührungsposition eines Zeigers (200) auf einem Bildschirm der Anzeige (110) basierend auf Licht, das von dem optischen Sensor (121) übertragen und erhalten wird, zu identifizieren,
eine Berührungsgröße des Zeigers (200) basierend auf Licht zu identifizieren, das von dem optischen Sensor (121) übertragen und erhalten wird, und
zu bewirken, dass die Anzeige (110) basierend auf einer Bewegung des Zeigers (200) ein Bild anzeigt, das der identifizierten Berührungsgröße entlang Berührungspositionen aufeinanderfolgender Berührungen auf dem Bildschirm entspricht,
**dadurch gekennzeichnet, dass** der Prozessor konfiguriert ist, um
basierend auf einer Größe und einer Auflösung der Anzeige (110) die Anzahl von Pixeln zu identifizieren, die der identifizierten Berührungsgröße des Zeigers (200) entsprechen, und
eine Breite von mindestens einem Teil des auf dem Bildschirm der Anzeige (110) angezeigten Bildes basierend auf der identifizierten Anzahl von Pixeln anzupassen, und
wobei der Prozessor (160) ferner konfiguriert ist, um:
basierend auf einem ausgewählten Modus mit veränderlicher Berührungsgröße in Echtzeit zu bewirken, dass die Anzeige (110) ein Bild anzeigt, dessen Breite entsprechend einer Veränderung in der identifizierten Berührungsgröße des Zeigers auf dem Bildschirm entlang Berührungspositionen aufeinanderfolgender Berührungen variiert wird, während der Zeiger bewegt wird,
basierend auf der Auswahl eines Modus mit fester Berührungsgröße zu bewirken, dass die Anzeige (110) ein Bild mit einer festen Breite entsprechend einer anfänglichen Berührung aufeinanderfolgender Berührungen auf dem Bildschirm entlang Berührungspositionen aufeinanderfolgender Berührungen anzeigt, während der Zeiger bewegt wird.

2. Anzeigevorrichtung (100) nach Anspruch 1, wobei
der optische Sensor (121) ferner so konfiguriert ist, dass er die Änderung der Berührungsgröße des Zeigers (200) bei den aufeinanderfolgenden Berührungen des Zeigers (200) identifiziert, und
der Prozessor (121) ferner dazu konfiguriert ist, eine Breite eines auf dem Bildschirm der Anzeige (110) angezeigten Schrift- oder Zeichenbildes basierend auf der Veränderung der identifizierten Berührungsgröße bei den aufeinanderfolgenden Berührungen anzupassen.

3. Anzeigevorrichtung (100) nach Anspruch 1, wobei der Prozessor (160) ferner konfiguriert ist, um die Berührungsgröße basierend auf mindestens einem zwischen einer Breite und einer Höhe eines auf dem Bildschirm der Anzeige (110) durch den Zeiger (200) berührten Bereichs zu identifizieren.

4. Anzeigevorrichtung (100) nach Anspruch 1, wobei der optische Sensor (121) ferner konfiguriert ist, um eine Matrix vor dem Bildschirm der Anzeige (110) mit Licht zu bilden, das zwischen der Vielzahl von Lichtsendern und der Vielzahl von Lichtempfängern übertragen und erhalten wird.

5. Anzeigevorrichtung (100) nach Anspruch 1, wobei der Zeiger (200) mindestens eines von Folgendem umfasst: einen Daumen, einen oder mehrere Finger oder eine Handfläche eines Benutzers oder eine Vorrichtung vom passiven Typ, einschließlich eines Stifts oder einer Bürste.

6. Anzeigevorrichtung (100) nach Anspruch 1, wobei der Prozessor (160) ferner konfiguriert ist, um die identifizierte Berührungsgröße in einen Druckwert umzuwandeln und um die Breite zumindest des Teils des Bildes basierend auf dem umgewandelten Druckwert anzupassen.

7. Anzeigevorrichtung (100) nach Anspruch 1, wobei der Prozessor (160) ferner konfiguriert ist, um die Breite von mindestens dem Abschnitt des Bildes, der der Veränderung der Berührungsgröße entspricht, basierend darauf, dass die identifizierte Berührungsgröße innerhalb eines voreingestellten Bereichs liegt, anzupassen.

8. Anzeigevorrichtung (100) nach einem der Ansprüche 1 bis 7, wobei der Prozessor (160) ferner konfiguriert ist, um zu steuern, dass das auf dem Bildschirm angezeigte Bild entsprechend den Berührungspositionen der aufeinanderfolgenden Berührungen der Berührungsposition des Zeigers basierend darauf gelöscht wird, dass die identifizierte Berührungsgröße größer als ein voreingestellter Schwellenwert ist.

9. Verfahren zum Steuern einer Anzeigevorrichtung (100), wobei das Verfahren Folgendes umfasst:
Identifizieren einer Berührungsposition eines Zeigers (200) auf einem Bildschirm einer Anzeige (110), basierend auf Licht, das von einem optischen Sensor (121) übertragen und erhalten wird, der eine Vielzahl von Lichtsendern und eine Vielzahl von Lichtempfängern umfasst, die um die Anzeige (110) herum angeordnet, einander zugewandt und dazu konfiguriert sind, Licht zu übertragen und zu empfangen;
Identifizieren einer Berührungsgröße des Zeigers (200) basierend auf Licht, das von dem optischen Sensor (121) übertragen und erhalten wird,
Anzeigen eines Bildes, das der identifizierten Berührungsgröße auf dem Bildschirm entspricht, entlang Berührungspositionen aufeinanderfolgender Berührungen, basierend auf einer Bewegung des Zeigers (200);
**dadurch gekennzeichnet, dass** das Identifizieren der Berührungsgröße Folgendes umfasst:
Identifizieren der Anzahl von Pixeln, die der identifizierten Berührungsgröße entsprechen, basierend auf einer Größe und einer Auflösung der Anzeige (110), und
Anpassen einer Breite von mindestens einem Teil des auf dem Bildschirm der Anzeige (110) angezeigten Bildes basierend auf der identifizierten Anzahl von Pixeln,
wobei das Anzeigen des Bildes ferner Folgendes umfasst:
basierend auf einem ausgewählten Modus mit veränderlicher Berührungsgröße in Echtzeit, Anzeigen eines Bilds, dessen Breite entsprechend der Veränderung der identifizierten Berührungsgröße des Zeigers auf dem Bildschirm der Anzeige (110) entlang Berührungspositionen aufeinanderfolgender Berührungen variiert wird, während der Zeiger bewegt wird,
basierend auf der Auswahl eines Modus mit fester Berührungsgröße, Anzeigen eines Bildes mit einer festen Breite entsprechend einer anfänglichen Berührung von aufeinanderfolgenden Berührungen auf dem Bildschirm der Anzeige (110) entlang Berührungspositionen von aufeinanderfolgenden Berührungen, während der Zeiger bewegt wird.

10. Verfahren nach Anspruch 9, wobei
das Identifizieren der Berührungsgröße das Identifizieren der Veränderung der Berührungsgröße des Zeigers (200) bei den aufeinanderfolgenden Berührungen des Zeigers umfasst, und
das Anpassen der Breite des Bildes das Anpassen einer Breite eines auf dem Bildschirm der Anzeige (110) angezeigten Schrift- oder Zeichenbildes basierend auf der Veränderung der identifizierten Berührungsgröße bei den aufeinanderfolgenden Berührungen umfasst.

11. Verfahren nach Anspruch 9, wobei das Identifizieren der Berührungsgröße das Identifizieren der Berührungsgröße basierend auf mindestens einem zwischen einer Breite und einer Höhe eines auf dem Bildschirm der Anzeige (110) durch den Zeiger (200) berührten Bereichs umfasst.

12. Verfahren nach Anspruch 9, ferner umfassend:
Umwandeln der identifizierten Berührungsgröße in einen Druckwert; und
Anpassen der Breite von mindestens dem Teil des Bildes basierend auf dem umgewandelten Druckwert.

13. Verfahren nach einem der Ansprüche 9 bis 12, wobei das Anpassen der Breite des mindestens einen Teils des Bildes das Anpassen der Breite des mindestens einen Teils des Bildes entsprechend der Veränderung der Berührungsgröße basierend darauf umfasst, dass die identifizierte Berührungsgröße innerhalb eines voreingestellten Bereichs liegt.

## Revendications

1. Appareil d'affichage (100) comprenant :
un affichage (110) ;
un capteur optique (121) comprenant une pluralité d'émetteurs de lumière et une pluralité de récepteurs de lumière agencés autour de l'affichage, se faisant face et configurés pour transmettre et obtenir de la lumière ; et
un processeur (160) configuré pour :
identifier une position tactile d'un pointeur (200) sur un écran de l'affichage (110), sur la base de la lumière transmise et obtenue par le capteur optique (121),
identifier une taille tactile du pointeur (200), sur la base de la lumière transmise et obtenue par le capteur optique (121), et
amener l'affichage (110) à afficher une image correspondant à la taille tactile identifiée sur l'écran le long de positions tactiles de touchers successifs, sur la base du déplacement du pointeur (200),
**caractérisé en ce que** le processeur est configuré pour
identifier le nombre de pixels correspondant à la taille tactile identifiée du pointeur (200), sur la base d'une taille et d'une résolution de l'affichage (110), et
ajuster une largeur d'au moins une partie de l'image affichée sur l'écran de l'affichage (110) sur la base du nombre identifié de pixels, et
dans lequel le processeur (160) est en outre configuré pour :
sur la base d'un mode de taille tactile variable en temps réel sélectionné, amener l'affichage (110) à afficher une image dont une largeur varie en fonction de la variation de la taille tactile identifiée du pointeur sur l'écran le long de positions tactiles de touchers successifs tandis que le pointeur est déplacé,
sur la base d'un mode de taille tactile fixe étant sélectionné, amener l'affichage (110) à afficher une image avec une largeur fixe correspondant à un toucher initial de touchers successifs sur l'écran le long de positions tactiles de touchers successifs tandis que le pointeur est déplacé.

2. Appareil d'affichage (100) selon la revendication 1, dans lequel
le capteur optique (121) est en outre configuré pour identifier la variation de la taille tactile du pointeur (200) lors des touchers successifs du pointeur (200), et
le processeur (121) est en outre configuré pour ajuster une largeur d'une image d'écriture ou de dessin affichée sur l'écran de l'affichage (110) sur la base de la variation de la taille tactile identifiée lors des touchers successifs.

3. Appareil d'affichage (100) selon la revendication 1, dans lequel le processeur (160) est en outre configuré pour identifier la taille tactile sur la base d'au moins l'une entre une largeur et une hauteur d'une région touchée par le pointeur (200) sur l'écran de l'affichage (110).

4. Appareil d'affichage (100) selon la revendication 1, dans lequel le capteur optique (121) est en outre configuré pour former une matrice devant l'écran de l'affichage (110) avec la lumière transmise et obtenue entre la pluralité d'émetteurs de lumière et la pluralité de récepteurs de lumière.

5. Appareil d'affichage (100) selon la revendication 1, dans lequel le pointeur (200) comporte au moins l'un parmi : le pouce, un ou plusieurs doigts ou la paume d'un utilisateur, ou un dispositif de type passif comportant un stylo ou un pinceau.

6. Appareil d'affichage (100) selon la revendication 1, dans lequel le processeur (160) est en outre configuré pour convertir la taille tactile identifiée en une valeur de pression, et ajuster la largeur de ladite au moins une partie de l'image sur la base de la valeur de pression convertie.

7. Appareil d'affichage (100) selon la revendication 1, dans lequel le processeur (160) est en outre configuré pour ajuster la largeur de ladite au moins une partie de l'image correspondant à la variation de la taille tactile, sur la base de la taille tactile identifiée se situant dans les limites d'une plage prédéfinie.

8. Appareil d'affichage (100) selon l'une quelconque des revendications 1 à 7, dans lequel le processeur (160) est en outre configuré pour commander l'image affichée sur l'écran à supprimer correspondant aux positions tactiles des touchers successifs de la position tactile du pointeur, sur la base de la taille tactile identifiée étant supérieure à une valeur seuil prédéfinie.

9. Procédé de commande d'un appareil d'affichage (100), le procédé comprenant :
l'identification d'une position tactile d'un pointeur (200) sur un écran d'un affichage (110), sur la base de la lumière transmise et obtenue par un capteur optique (121) comportant une pluralité d'émetteurs de lumière et une pluralité de récepteurs de lumière agencés autour de l'affichage (110), se faisant face et configurés pour transmettre et obtenir de la lumière ;
l'identification d'une taille tactile du pointeur (200), sur la base de la lumière transmise et obtenue par le capteur optique (121),
l'affichage d'une image correspondant à la taille tactile identifiée sur l'écran le long de positions tactiles de touchers successifs, sur la base du déplacement du pointeur (200),
**caractérisé en ce que** l'identification de la taille tactile comprend :
l'identification du nombre de pixels correspondant à la taille tactile identifiée, sur la base d'une taille et d'une résolution de l'affichage (110), et
l'ajustement d'une largeur d'au moins une partie de l'image affichée sur l'écran de l'affichage (110) sur la base du nombre identifié de pixels,
dans lequel l'affichage de l'image comprend en outre :
sur la base d'un mode de taille tactile variable en temps réel sélectionné, l'affichage d'une image dont une largeur varie en fonction de la variation de la taille tactile identifiée du pointeur sur l'écran de l'affichage (110) le long de positions tactiles de touchers successifs tandis que le pointeur est déplacé,
sur la base d'un mode de taille tactile fixe étant sélectionné, l'affichage d'une image avec une largeur fixe correspondant à un toucher initial de touchers successifs sur l'écran de l'affichage (110) le long de positions tactiles de touchers successifs tandis que le pointeur est déplacé.

10. Procédé selon la revendication 9, dans lequel
l'identification de la taille tactile comprend l'identification de la variation de la taille tactile du pointeur (200) lors des touchers successifs du pointeur, et
l'ajustement de la largeur de l'image comprend l'ajustement d'une largeur d'une image d'écriture ou de dessin affichée sur l'écran de l'affichage (110) sur la base de la variation de la taille tactile identifiée lors des touchers successifs.

11. Procédé selon la revendication 9, dans lequel l'identification de la taille tactile comprend l'identification de la taille tactile sur la base d'au moins l'une entre une largeur et une hauteur d'une région touchée par le pointeur (200) sur l'écran de l'affichage (110) .

12. Procédé selon la revendication 9, comprenant en outre :
la conversion de la taille tactile identifiée en une valeur de pression ; et
l'ajustement de la largeur de ladite au moins une partie de l'image sur la base de la valeur de pression convertie.

13. Procédé selon l'une quelconque des revendications 9 à 12, dans lequel l'ajustement de la largeur de ladite au moins une partie de l'image comprend l'ajustement de la largeur de ladite au moins une partie de l'image correspondant à la variation de la taille tactile, sur la base de la taille tactile identifiée se situant dans les limites d'une plage prédéfinie.
